# EUROPEAN PATENT SPECIFICATION

(11) **EP 4 073 752 B1**
(45) Date of publication and mention of the grant of the patent: **25.11.2026**
(21) Application number: 20899126.5
(22) Date of filing: 08.12.2020
(51) Int. Cl.: G06T 7/11, G06T 7/00, G06T 7/10

(54) **METHOD FOR DETERMINING SEVERITY OF SKIN DISEASE BASED ON PERCENTAGE OF BODY SURFACE AREA COVERED BY LESIONS**
VERFAHREN ZUM BESTIMMEN DES SCHWEREGRADS EINER HAUTKRANKHEIT ANHAND DES PROZENTSATZES DER VON LÄSIONEN BEDECKTEN KÖRPEROBERFLÄCHE
PROCÉDÉ DE DÉTERMINATION DE LA GRAVITÉ D'UNE MALADIE DE LA PEAU SUR LA BASE D'UN POURCENTAGE DE SURFACE CORPORELLE COUVERTE PAR DES LÉSIONS

(30) Priority: 09.12.2019 US 201962945642 P
(43) Date of publication of application: 19.10.2022
(73) Proprietor: Janssen Biotech, Inc., Horsham, PA 19044 (US)
(72) Inventor: CHEN, Yanqing, San Diego, California 92121 (US); TANG, Charles, Berkeley, California 94707 (US); MUNOZ-ELIAS, Ernesto J., Rancho Santa Fe, CA 92067 (US)
(74) Representative: Carpmaels & Ransford LLP
(86) International application number: PCT/IB2020/061648
(87) International publication number: WO 2021/116909

(56) References cited:
- US-A1- 2009 136 101
- US-A1- 2013 018 271
- US-A1- 2014 316 235
- US-A1- 2015 206 022
- MUNIA TAMANNA T K ET AL: "Automatic clustering-based segmentation and plaque localization in psoriasis digital images", 2017 IEEE HEALTHCARE INNOVATIONS AND POINT OF CARE TECHNOLOGIES (HI-POCT), IEEE, 6 November 2017 (2017-11-06), pages 113 - 116, XP033286766, DOI: 10.1109/HIC.2017.8227597
- TANCHAROEN DATCHAKORN ET AL: "Medical Imaging using Automatic Region of Interest Segmentation for Psoriasis Diagnosis", 2019 34TH INTERNATIONAL TECHNICAL CONFERENCE ON CIRCUITS/SYSTEMS, COMPUTERS AND COMMUNICATIONS (ITC-CSCC), IEEE, 23 June 2019 (2019-06-23), pages 1 - 4, XP033594874, DOI: 10.1109/ITC-CSCC.2019.8793310
- ALI ABDER-RAHMAN ET AL: "Supervised Versus Unsupervised Deep Learning Based Methods for Skin Lesion Segmentation in Dermoscopy Images", 24 April 2019, ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 373 - 379, ISBN: 978-3-319-10403-4, XP047507948
- JIANG XUE ET AL: "An Adaptive Region Growing Based on Neutrosophic Set in Ultrasound Domain for Image Segmentation", IEEE ACCESS, vol. 7, 21 May 2019 (2019-05-21), pages 60584 - 60593, XP011725145, DOI: 10.1109/ACCESS.2019.2911560
- HERREDSVELA JOSTEIN ET AL: "Detection of circumscribed masses in mammograms using morphological segmentation", vol. 5747, 29 April 2005 (2005-04-29), pages 902 - 913, XP093102917, ISSN: 0277-786X, Retrieved from the Internet <URL:https://www.researchgate.net/profile/Kjersti-Engan/publication/252188623_Detection_of_circumscribed_masses_in_mammograms_using_morphological_segmentation/links/5703868308ae646a9da99091/Detection-of-circumscribed-masses-in-mammograms-using-morphological-segmentation.pdf> DOI: 10.1117/12.595196

## Description

### BACKGROUND OF THE INVENTION

Disease severity evaluations of skin diseases such as Psoriasis involves calculating the percentage of Body Surface Area that is covered by lesions and inflammation (i.e., BSA score). Hereafter, lesions and inflammation are collectively referred to as "lesions." BSA is the measured or calculated surface area of a human body.

Psoriasis is an autoimmune skin disease manifested as red and inflammatory areas that is distinct from healthy normal skin. An important part of disease severity measurements for Psoriasis is to monitor what percentage of Body Surface Area is covered by inflamed areas called "lesions." For Plaque Psoriasis, two major disease measurements are BSA and PASI (Psoriasis Area and Severity Index), both of which involve calculating a percentage score that is used to monitor the disease progression and treatment effect (A Bozek, A. Reich (2017). The reliability of three psoriasis assessment tools: Psoriasis area and severity index, body surface area and physician global assessment. Adv Clin Exp Med. 2017 Aug;26(5):851-856. doi: 10.17219/acem/69804). Currently these percentages are often estimated in physician's office by a dermatologist or nurse. A major problem with current Psoriasis disease scores is that they are inexact and coarse estimations with human biases. Furthermore, the process to calculate the percentages to get an overall PASI score is tedious and time consuming. Another clinical need is that there is currently no BSA measures for Guttate Psoriasis in which the body areas affected are large and covered by numerous inflammatory lesions ranging from 2 to 10 mm in size, making it difficult to measure by eyesight.

Accordingly, there is a need for a more objective and quantitative way to monitor the skin inflammation using computational methods. The present invention fulfills such a need.

The article "Automatic clustering-based segmentation and plaque localization in psoriasis digital images" (Munia Tamanna T Ket et al, 2017, Healthcare Innovations and Point of Care Technologies (HIPOCT), IEEE, 6 November 2017 (2017-11-06), pages 113-116) provides an automatic psoriasis segmentation and plaque localization system using images captured by a digital camera and a region based color feature extractor for classification of psoriasis plaques from healthy skin areas.

### SUMMARY OF THE INVENTION

The invention provides a computerized method according to claim 1. Particular embodiments are provided by the dependent claims.

An image processing method is provided that automatically calculates BSA score using machine learning techniques. A Felzenszwalb image segmentation algorithm is used to define proposed regions in each of a plurality of training set images. The training set images are oversegmented ("over segmented" or "over-segmented"), and then each of the proposed regions in each of the plurality of oversegmented training set images are manually classified as being a lesion or a non-lesion. A Convolutional Neural Network (CNN) is then trained using the manually classified proposed regions in each of the plurality of training set images. The trained CNN is then used on test images to calculate BSA scores. Also included in the present invention is a device (or computer system) driven by computer instructions that is used in connection with the method, e.g., computer-related device or medium for performing the method as known in the relevant art.

### BRIEF DESCRIPTION OF DRAWINGS

The foregoing summary as well as the following detailed description of preferred embodiments of the invention, will be better understood when read in conjunction with the appended drawings. For the purpose of illustrating the invention, the drawings show presently preferred embodiments. However, the invention is not limited to the precise arrangements and instrumentalities shown. **In** the drawings:
Figure 1 illustrates Psoriasis Image segmentation using Felzenszwalb, Quickshift, SLIC, and Compact watershed methods.
Figure 2 illustrates a Psoriasis image correctly segmented by the Felzenszwalb method.
Figure 3 illustrates three different types of inaccurately segmented Psoriasis images: under-segmented, over-segmented and a whole-image segmented.
Figure 4 illustrates how a CNN filter improves Felzenszwalb segmentation results.
Figure 5A illustrates under segmentation of an image.
Figure 5B illustrates oversegmentation of an image.
Figure 6 is a flowchart of a computerized method for determining severity of skin disease based on percentage of BSA that is covered by lesions, in accordance with one preferred embodiment of the present invention.
Figures 7A and 7B are schematic diagrams of system software and hardware for implementing Figure 6.

### DETAILED DESCRIPTION OF THE INVENTION

Certain terminology is used herein for convenience only and is not to be taken as a limitation on the present invention.

### I. OVERVIEW

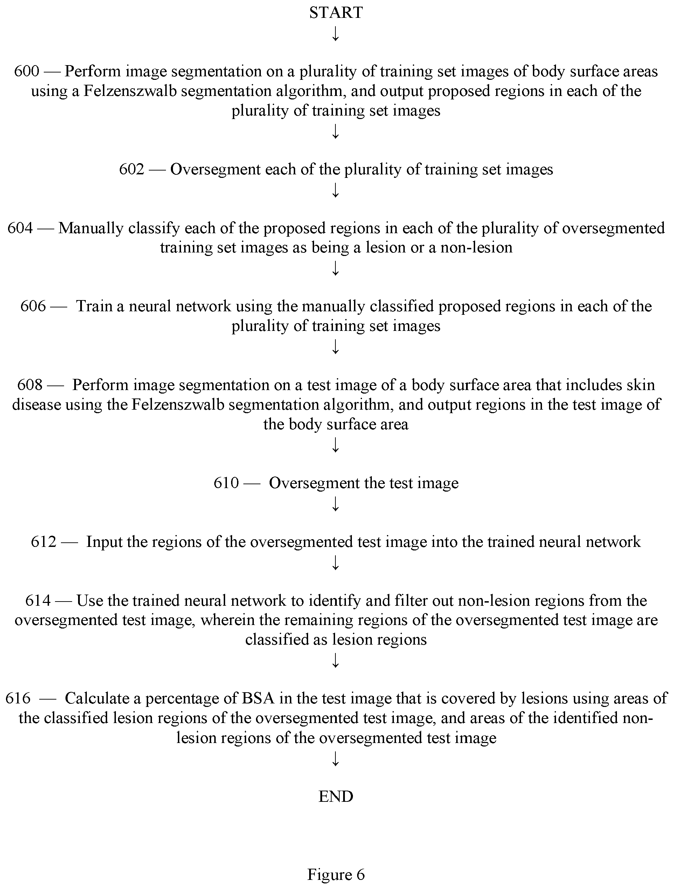

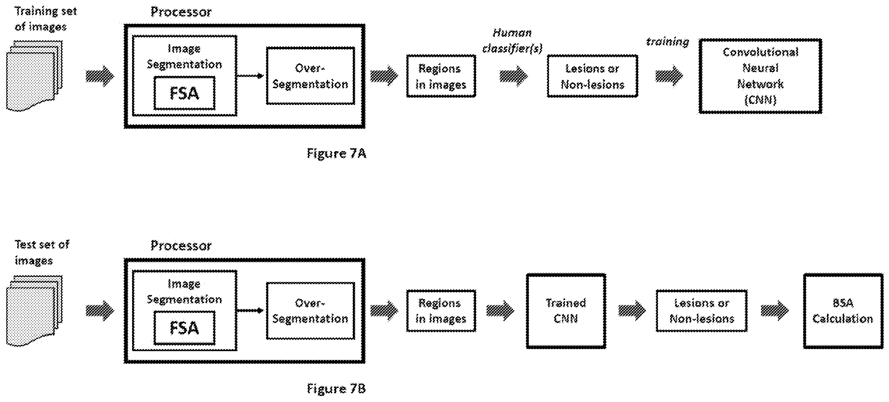

Figure 6 is a flowchart of a computerized method for determining severity of skin disease (e.g., psoriasis) based on percentage of BSA that is covered by lesions. Figures 7A and 7B are schematic diagrams of system software and hardware for implementing Figure 6.

Referring to Figures 6, 7A, and 7B, the method operates as follows:
**Step 600:** Perform image segmentation on a plurality of training set images of body surface areas using a Felzenszwalb segmentation algorithm (FSA), and output proposed regions in each of the plurality of training set images. Each of the plurality of training set images of body surface areas include skin disease. This image segmentation step is performed by the processor shown in Figure 7A.
**Step 602:** Oversegment each of the plurality of training set images. This step is also performed by the processor.
**Step 604:** Manually classify each of the proposed regions in each of the plurality of oversegmented training set images as being a lesion or a non-lesion. This step is performed by one or more human classifiers shown in Figure 7A.
**Step 606:** Train a neural network using the manually classified proposed regions in each of the plurality of training set images. This step is performed by the neural network shown in Figure 7A.
**Step 608:** Perform image segmentation on a test image of a body surface area that includes skin disease using the Felzenszwalb segmentation algorithm, and output regions in the test image of the body surface area. This image segmentation step is performed by the processor shown in Figure 7B. The processor may be the same, or different processor as the processor shown in Figure 7A.
**Step 610:** Oversegment the test image. This step is also performed by the processor.
**Step 612:** Input the regions of the oversegmented test image into the trained neural network shown in Figure 7B because it is the same neural network as the neural network in Figure 7A, except that it is now trained.
**Step 614:** Use the trained neural network to identify and filter out non-lesion regions from the oversegmented test image, wherein the remaining regions of the oversegmented test image are classified as lesion regions.
**Step 616:** Calculate a percentage of BSA in the test image that is covered by lesions using areas of the classified lesion regions of the oversegmented test image, and areas of the identified non-lesion regions of the oversegmented test image. This step is performed in a processor, which may be the same, or different processor as the processors shown in Figure 7A and 7B.

### II. DETAILED DISCLOSURE

The detailed disclosure below describes the experimental process that led to the present invention, and explains approaches that were more successful than others.

The present invention treats the body surface area calculation as an image segmentation problem. Image segmentation has become one of the cornerstone issues within computer vision and is defined as the process of partitioning digital images into multiple segments, thereby organizing image data into meaningful chunks. A series of image segmentation methods were investigated that can effectively calculate the body surface area of a patient's psoriasis disease. Preferred embodiments of the presently claimed invention use the Felzenszwalb image segmentation algorithm [3], and Convolutional Neural Networks (A. Krizhevsky, I. Sutskever, G.E. Hinton (2012) Imagenet classification with deep convolutional neural networks. Advances in Neural Information Processing (NeurIPS), 2012.) as a false positive filter to improve upon the Felzenszwalb segmentation results.

Several image processing methods were tested to automatically calculate BSA score using machine learning techniques applied on 117 Guttate and Plaque Psoriasis images downloaded from the internet. In comparison to several other unsupervised segmentation methods, the Felzenszwalb image segmentation algorithm generated the highest percentages of correct segmentations of lesion versus non-lesion areas with 56% of images having a good segmentation while 44% of images are under or over segmented. To improve the segmentation results, a Convolutional Neural Network (CNN) was implemented, inspired by Visual Geometry Group (VGG) architecture to further filter out false positive lesions from the Felzenszwalb algorithm's proposed regions. Training data for the CNN were comprised of human curated datasets of lesional and nonlesional regions outputted from the Felzenszwalb algorithm. The CNN achieved a 90% 5-fold cross validation testing accuracy score in classifying between lesions and non-lesions. This CNN filter, applied alongside the Felzenszwalb algorithm, accurately segmented 77% of the training data or 67 out of the 86 guttate psoriasis images. This method is useful for digitizing disease severity measurements and remote monitoring of skin diseases such as Psoriasis for patients and physicians.

### Image Data for Psoriasis

To gather the dataset, about 300 images of guttate psoriasis and 100 images of chronic plaque psoriasis were scraped from Google Images. Inaccurate and/or misleading image data were filtered out, leaving a final dataset of 86 guttate psoriasis images and 31 chronic plaque psoriasis images.

### Psoriasis Image Segmentation Methods

Five different image segmentation algorithms were tested, all implemented using the scikit-learn and OpenCV library in Python. The five tested algorithms were Felzenszwalb, Quickshift, SLIC, Compact watershed, and Otsu's Thresholding algorithm (see a review in D..Liu, B. Soran, G. Petrie, and L. Shapiro. A review of computer vision segmentation algorithms. Lecture notes, 53, 2012.). After visually inspecting a couple image examples, it became apparent that the Felzenszwalb method (P.F. Felzenszwalb and D.P. Huttenlocher (2004) Efficient Graph-Based Image Segmentation. International Journal of Computer Vision 59(2), 167-181.) produced the most promising segmentation by far.

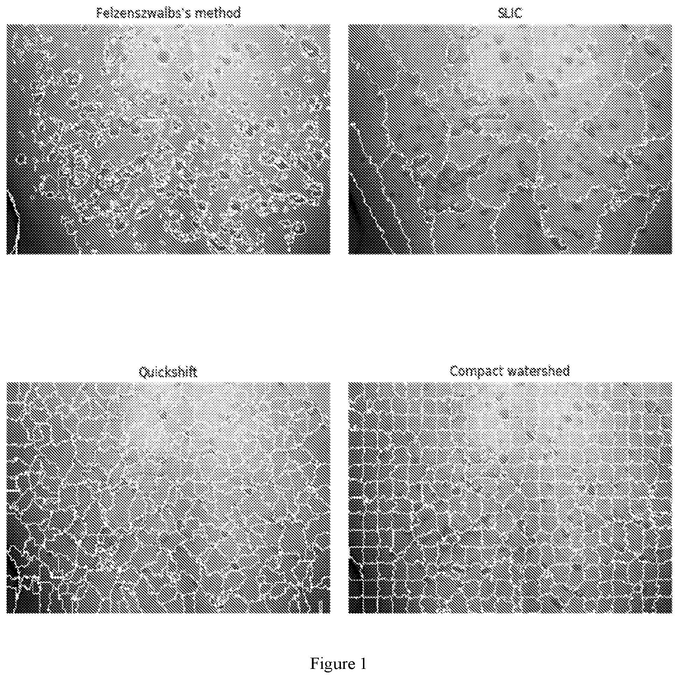

Figure 1 shows the output images of four different segmentation algorithms. Yellow boundaries mark the segmentation of a suggested (proposed) region by the algorithm. After these tests, it was decided to segment all images with the Felzenszwalb algorithm.

### Psoriasis Segmentation and Binary Classification Filtering Algorithm

To enhance the Felzenszwalb segmentation results, a new algorithm was used based upon a convolutional neural network filter that removes false positives from the segmentation. This algorithm is inspired by and holds similarities to the region-based convolutional neural networks (R-CNNs) that currently have become the state of the art in tackling image segmentation problems. The algorithm operates as follows:
1. Train a neural network to distinguish between lesions and non-lesions among proposed regions from the Felzenszwalb segmentation algorithm.
2. Oversegment the image by increasing the k-value parameter to an optimal threshold (k = 250).
3. Use the neural network to filter out the non-lesions proposed by the Felzenszwalb segmentation.

Oversegmenting the image in step 2 ensures that most lesions will be included inside the segmentation. Then, to filter out the excess non-lesions or false positives the pre-trained neural network from step 1 is used to distinguish non-lesion regions from lesion regions in step 3.

### Training Data

The proposed regions outputted from the Felzenszwalb segmentation algorithm (with the k-value set to 250) were used to oversegment the image, thereby including as many true positive lesion regions as possible. Next, about 30 guttate psoriasis images were chosen, which generated around 3000 proposed region images. Then, each of the 3000 proposed regions were manually (human) classified as lesion or non-lesion. To verify the accuracy of this dataset, the process was repeated three times. Some of these non-lesions were easy to identify, including huge regions covering a lot of skin, black background areas, necklaces, noise, and the like. Other regions were harder to distinguish between lesion and non-lesion including regions that had shade, bad lighting, scars, and the like. A large source of error is believed to be attributed to the incongruencies in the dataset and these harder regions to classify as lesion versus non-lesion. This may be another explanation for why the binary classification results are still not close to the state-of-the-art results seen in the Modified National Institute of Standards and Technology (MNIST) or Canadian Institute for Advanced Research (CIFAR) datasets.

### Binary Classification Neural Network Experiments

To train the neural network models a procedure was followed similar to the one described below:
First, all proposed region inputs were preprocessed by resizing all of the images to a certain constant pixel size using the cubic interpolation method from the opencv library. Next, different parameters of the neural network model were changed including model architecture (dense neural network vs convolutional neural network, hidden layer sizes, batch normalization), parameters (learning rate), and input image interpolation pixel sizes (4x4, 8x8, 16x16, 32x32, 64x64). Finally, all of the models were tested with an 80-20 train-test data split ratio to determine the accuracy, log-loss, and mean squared error scores of the respective models. This means that 80% of the data was used to build the model and 20% of the remainder data (which was unseen by the model) was used to evaluate the predictive strength of the model.

The final CNN model that was chosen was inspired by the VGG-architecture, did not use batch normalization, had smaller hidden layers (both in number of hidden layers and width of hidden layers), had a learning rate of 1e-4, and used the Adam optimizer. (Adam is an adaptive learning rate optimization algorithm that's been designed specifically for training deep neural networks.) To ensure the accuracy of the final model, this model was tested with 5-fold cross validation and got an average 5-fold training accuracy score of 94% and an average 5-fold testing accuracy score of 90%.

### Things that improved Accuracy Results

There were three approaches that greatly improved the binary classification accuracy of the neural network:
The first approach was to cubic interpolate the shape of the input images to a constant 16x16 pixel size. At first, when the images were set to size 64x64, the classification accuracy hovered at extremely low rates of 60%. As the size of images was lowered, it was discovered that a standard small dense neural network would achieve better and better classification performances until one reached an optimal 16x16 image size. A reason for this may be that most proposed regions were around 16x16 sizes. Thus, interpolating more information may cause the region to gain misleading information and interpolating less information may cause the region to lose valuable information.

The second approach was to use convolutional neural networks, as opposed to dense neural networks. It is well known that convolutional neural networks perform better than dense neural networks in image classification tasks due to a myriad of reasons.

The third approach was that "less is more" when building convolutional neural network model architectures. For instance, when the hidden layer sizes were reduced, faster training times and more accurate testing validation scores were obtained. Specifically, reducing the first dense layer hidden size, which thereby reduces a significant number of parameters, was particularly important. This may be due to the fact that an excess of parameters may prevent the model from generalizing well and cause overfitting effects. This overfitting issue can best be seen in a near 10% accuracy loss between training and testing validation scores in large VGG-models.

### Things that had no effect or worsened segmentation results

Several approaches did not improve accuracy results. More specifically, three approaches had negligible or negative effects on the model.

First, adding batch normalization layers as seen in the VGG models was believed improve results, but as seen in certain papers (S. Santurkar, D. Tsipras, A. Ilyas, A. Madry (2018) How Does Batch Normalization Help Optimization? Advances in Neural Information Processing (NeurIPS), 2018.), batch normalization does not seem to improve classification accuracy in all cases.

Second, adjusting the learning rate did not provide performance gains. After testing the rates of 0.01, 0.001, 0.0003, and 0.0001 it was found that learning rate gives a negligible difference in performance results between 0.001, 0.0003, and 0.0001 learning rate parameters.

Third, deeper and wider network did not increase the accuracy of the model. The larger dense neural network models and convolutional neural network models seemed to do worse by up to even 10% on cross validation testing than the simple small VGG-models that was tried. This seems to support the founding principles of the agile development principle - simplicity.

### Results and Discussion

### i. Image Segmentation Algorithms Benefits and Drawbacks

After testing a small sample of images upon the five different algorithms, it became clear that the Felzenszwalb algorithm had far superior results than the other five unsupervised algorithms, as shown in Figure 1. An important characteristic of this method is its ability to preserve detail in low-variability image regions while ignoring detail in high-variability regions. It is also fast (< 1 sec for 512x512 image) with runtime O(n log n) where n is number of pixels. Based upon these observations the Felzenszwalb method was chosen to be the main method that was applied for Psoriasis images.

### ii. Felzenszwalb Image Segmentation Scoring Metric and Results

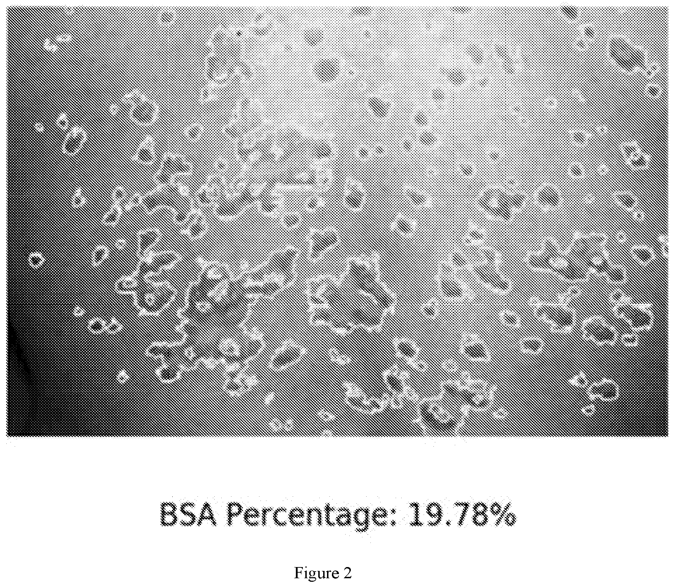

Figure 2 shows an example of a good image segmentation. A good image segmentation is defined as any image segmentation that did not miss any clearly significant lesional parts that a typical doctor should have classified.

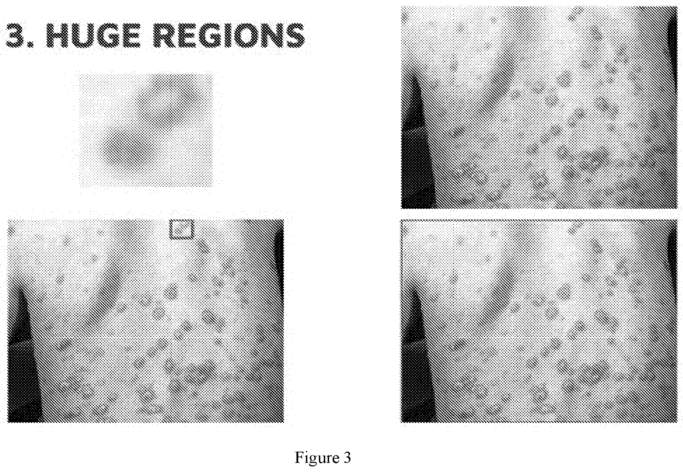

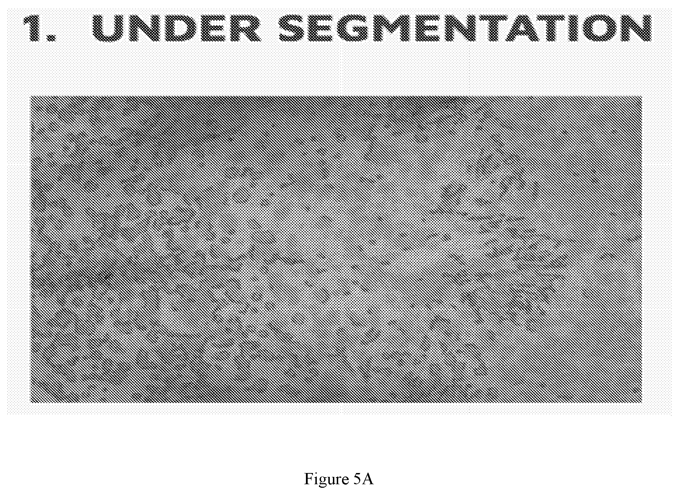

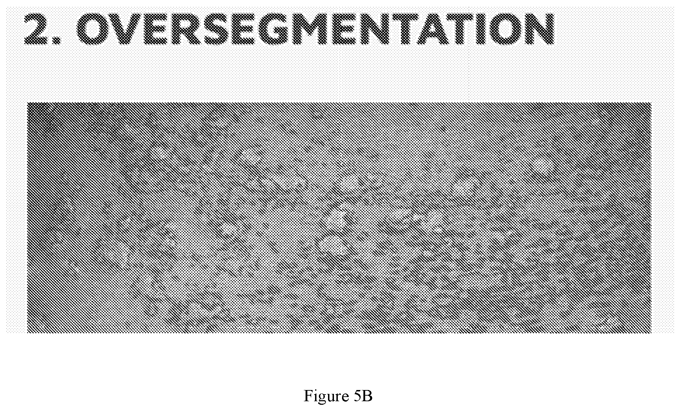

Figure 3 shows three examples of inaccurate image segmentations. The first image is an example of an under segmented region. In order to reduce this problem, one should decrease the k-value parameter. The second image is an example of an over segmented region. In order to alleviate this issue, one should increase the k-value parameter. The last example is an instance of huge regions being classified as lesions. In order to alleviate this, one should increase the k-value parameter. Figures 5A and 5B also show examples of under segmentation and oversegmentation.

The baseline Felzenszwalb algorithm was able to segment 49 out of 88 input images with a good segmentation, 30 out of 88 input images were under segmented, and 9 out of 88 input images were over segmented. BSA score calculations were generated at the end of each segmentation result.

### iii. Neural Network Based Filtering Results

25 different neural network models were tested with different parameters, architects, and input sizes. Test accuracies of each models were calculated. Setting lower image sizes, choosing smaller VGG-based Convolutional Neural Networks, and learning rates of 1e-4 produces the best model with the highest test accuracy of 0.9.

### iv. Convolutional Neural Network Filter and Felzenszwalb Image Segmentation Results

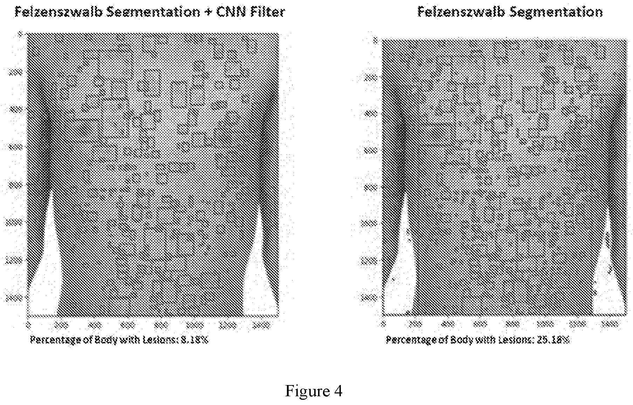

After implementing Felzenszwalb image segmentation filtered by the convolutional neural network, 67 out of 86 images provided good segmentation, 16 out of 86 images with an under segmentation, and 3 out of 86 images with an oversegmentation. Two input images were removed from the original Felzenszwalb image segmentation set due to inaccurate representations of guttate psoriasis. An example of the convolutional neural network improving segmentation results can be seen in the images of Figure 4.

In the image on the left of Figure 4, the convolutional neural network was able to filter out the large regions on the left side of the arm, all background white regions, and many small noise regions which were manually classified as non-lesions. With better training data and more extensive training, the neural network model can achieve even better filtering results and be used as an effective complement with the Felzenszwalb segmentation algorithm to remove false positive non-lesions.

### Conclusion

In retrospect, it was found that the Felzenszwalb image segmentation algorithm produced a good baseline diagnosis algorithm that could effectively calculate the body surface area of lesions for a patient. It was also discovered that convolutional neural networks could classify with great accuracy between proposed lesion and non-lesions from the Felzenszwalb segmentation outputs when given a good training dataset. Combining these two results, it was shown that the Felzenszwalb image segmentation algorithm combined with a convolutional neural network filter does a great baseline diagnosis by calculating the image segmentation and thereby body surface area score for the psoriasis disease.

The BSA calculation methods described above may be used to generate a digitized Psoriasis disease score calculation system. For example, by training similar convolutional neural networks with 5 input images of front body, back, front leg, back leg, and head regions to automating the full PASI scoring system may output a severity index PASI score between 0-72. Such computer systems, such as proposed recently in (C. Fink, L. Uhlmann, C. Klose, et al (2018) Automated, computer-guided PASI measurements by digital image analysis versus conventional physicians' PASI calculations: study protocol for a comparative, single-centre, observational study BMJ Open 2018;8:e018461. doi: 10.1136/bmjopen-2017-018461.), can assist doctors in creating better, faster, and more informed decisions in diagnosis and monitoring of skin diseases such as Psoriasis.

It will be appreciated by those skilled in the art that changes could be made to the embodiments described above without departing from the scope of the invention as defined by the appended claims. It is understood, therefore, that this invention is not limited to the particular embodiments disclosed, but it is intended to cover modifications within the scope of the claims.

## Claims

1. A computer-implemented method for determining severity of skin disease based on percentage of body surface area, BSA, that is covered by lesions, the method comprising:
(a) performing image segmentation on a plurality of training set images of BSA's using a Felzenszwalb segmentation algorithm, wherein each of the plurality of training set images of BSA's include skin disease, the image segmentation performed using the Felzenszwalb segmentation algorithm outputting proposed regions in each of the plurality of training set images (600);
(b) oversegmenting each of the plurality of training set images using the proposed regions outputted from the Felzenszwalb segmentation algorithm (602);
(c) manually classifying each of the proposed regions in each of the plurality of oversegmented training set images as being a lesion or a non-lesion (604);
(d) training a neural network to distinguish between lesions and non-lesions using the manually classified proposed regions in each of the plurality of training set images (606);
(e) performing image segmentation on a test image of a BSA that includes skin disease using the Felzenszwalb segmentation algorithm, the image segmentation performed using the Felzenszwalb segmentation algorithm outputting regions in the test image of the BSA (608);
(f) oversegmenting the test image using the regions outputted from the Felzenszwalb segmentation algorithm (610);
(g) inputting the regions of the oversegmented test image into the trained neural network (612);
(h) using the trained neural network to identify and filter out non-lesion regions from the oversegmented test image, wherein the remaining regions of the oversegmented test image are classified as lesion regions (614); and
(i) calculating a percentage of BSA in the test image that is covered by lesions using areas of the classified lesion regions of the oversegmented test image, and the areas of identified non-lesion regions of the oversegmented test image (616).

2. The method of claim 1 wherein the training set images and the test image are both oversegmented by increasing the k-value parameter to about 250.

3. The method of claim 1 wherein the neural network is a convolutional neural network.

4. The method of claim 1 wherein prior to the training step (d), resizing the plurality of regions of the training set images to an image interpolation size of 16x16 pixels, and prior to step (g), resizing the regions of the test image to an image interpolation size of 16x16 pixels.

5. The method of claim 1 wherein the skin disease is psoriasis.

6. A computer system comprising a non-transitory computer-readable medium with instructions stored thereon, which when executed by a processor, cause the processor to perform the method of claim 1.

## Patentansprüche

1. Computerimplementiertes Verfahren zum Bestimmen des Schweregrads einer Hauterkrankung basierend auf dem Prozentsatz der Körperoberfläche, BSA, die von Läsionen bedeckt ist, das Verfahren umfassend:
(a) Durchführen einer Bildsegmentierung an einer Vielzahl von Trainingssatzbildern von BSAs unter Verwendung eines Felzenszwalb-Segmentierungsalgorithmus, wobei jedes der Vielzahl von Trainingssatzbildern von BSAs eine Hauterkrankung einschließt, wobei die unter Verwendung des Felzenszwalb-Segmentierungsalgorithmus durchgeführte Bildsegmentierung vorgeschlagene Regionen in jedem der Vielzahl von Trainingssatzbildern (600) ausgibt;
(b) Übersegmentieren jedes der Vielzahl von Trainingssatzbildern unter Verwendung der von dem Felzenszwalb-Segmentierungsalgorithmus (602) ausgegebenen vorgeschlagenen Regionen;
(c) manuelles Klassifizieren jeder der vorgeschlagenen Regionen in jedem der Vielzahl von übersegmentierten Trainingssatzbildern als eine Läsion oder eine Nicht-Läsion (604);
(d) Trainieren eines neuronalen Netzes, um zwischen Läsionen und Nicht-Läsionen zu unterscheiden, unter Verwendung der manuell klassifizierten vorgeschlagenen Regionen in jedem der Vielzahl von Trainingssatzbildern (606);
(e) Durchführen einer Bildsegmentierung an einem Testbild einer BSA, die eine Hauterkrankung einschließt, unter Verwendung des Felzenszwalb-Segmentierungsalgorithmus, wobei die unter Verwendung des Felzenszwalb-Segmentierungsalgorithmus durchgeführte Bildsegmentierung Regionen in dem Testbild der BSA (608) ausgibt;
(f) Übersegmentieren des Testbilds unter Verwendung der von dem Felzenszwalb-Segmentierungsalgorithmus (610) ausgegebenen Regionen;
(g) Eingeben der Regionen des übersegmentierten Testbildes in das trainierte neuronale Netz (612);
(h) Verwenden des trainierten neuronalen Netzes, um Nicht-Läsionsregionen aus dem übersegmentierten Testbild zu identifizieren und herauszufiltern, wobei die verbleibenden Regionen des übersegmentierten Testbilds als Läsionsregionen (614) klassifiziert werden; und
(i) Berechnen eines Prozentsatzes von BSA in dem Testbild, die von Läsionen bedeckt ist, unter Verwendung von Flächen der klassifizierten Läsionsregionen des übersegmentierten Testbildes und der Flächen von identifizierten Nicht-Läsionsregionen des übersegmentierten Testbilds (616).

2. Verfahren nach Anspruch 1, wobei die Trainingssatzbilder und das Testbild beide durch Erhöhen des k-Wert-Parameters auf etwa 250 übersegmentiert werden.

3. Verfahren nach Anspruch 1, wobei das erste neuronale Netz ein neurales Konvolutionsnetz ist.

4. Verfahren nach Anspruch 1, wobei vor dem Trainingsschritt (d) die Vielzahl von Regionen der Trainingssatzbilder auf eine Bildinterpolationsgröße von 16x16 Pixel in der Größe verändert wird und vor Schritt (g) die Regionen des Testbilds auf eine Bildinterpolationsgröße von 16x16 Pixel in der Größe verändert werden.

5. Verfahren nach Anspruch 1, wobei die Hauterkrankung Psoriasis ist.

6. Computersystem, umfassend ein nichtflüchtiges computerlesbares Medium mit darauf gespeicherten Anweisungen, die, wenn sie durch einen Prozessor ausgeführt werden, den Prozessor veranlassen, das Verfahren nach Anspruch 1 durchzuführen.

## Revendications

1. Procédé mis en œuvre par ordinateur permettant de déterminer la gravité d'une maladie de la peau sur la base d'un pourcentage de surface corporelle, BSA, qui est couverte par des lésions, le procédé comprenant :
(a) la réalisation d'une segmentation d'image sur une pluralité d'images d'ensemble d'apprentissage de BSA à l'aide d'un algorithme de segmentation de Felzenszwalb, dans lequel chacune de la pluralité d'images d'ensemble d'apprentissage de BSA comporte une maladie de la peau, la segmentation d'image réalisée à l'aide de l'algorithme de segmentation de Felzenszwalb délivrant en sortie des régions proposées dans chacune de la pluralité d'images d'ensemble d'apprentissage (600) ;
(b) la sur-segmentation de chacune de la pluralité d'images d'ensemble d'apprentissage à l'aide des régions proposées délivrées en sortie par l'algorithme de segmentation de Felzenszwalb (602) ;
(c) la classification manuelle de chacune des régions proposées dans chacune de la pluralité d'images d'ensemble d'apprentissage sur-segmentées comme étant une lésion ou une non-lésion (604) ;
(d) l'entraînement d'un réseau neuronal pour distinguer des lésions et des non-lésions à l'aide des régions proposées classées manuellement dans chacune de la pluralité d'images d'ensemble d'apprentissage (606) ;
(e) la réalisation d'une segmentation d'image sur une image de test d'une BSA qui comporte une maladie de la peau à l'aide de l'algorithme de segmentation de Felzenszwalb, la segmentation d'image effectuée à l'aide de l'algorithme de segmentation de Felzenszwalb délivrant en sortie des régions dans l'image de test de la BSA (608) ;
(f) la sur-segmentation de l'image de test à l'aide des régions délivrées en sortie par l'algorithme de segmentation de Felzenszwalb (610) ;
(g) l'introduction des régions de l'image de test sur-segmentée dans le réseau neuronal entraîné (612) ;
(h) l'utilisation du réseau de neurones entraîné pour identifier et éliminer par filtrage des régions de non lésion de l'image de test sur-segmentée, dans lequel les régions restantes de l'image de test sur-segmentée sont classées en tant que régions de lésion (614) ; et
(i) le calcul d'un pourcentage de BSA dans l'image de test qui est couverte par des lésions à l'aide des surfaces des régions de lésion classées de l'image de test sur-segmentée, et des surfaces de régions de non-lésion identifiées de l'image de test sur-segmentée (616).

2. Procédé selon la revendication 1, dans lequel les images d'ensemble d'apprentissage et l'image de test sont toutes deux sur-segmentées en augmentant le paramètre de valeur k à environ 250.

3. Procédé selon la revendication 1, dans lequel le réseau neuronal est un réseau neuronal convolutif.

4. Procédé selon la revendication 1, dans lequel, avant l'étape d'apprentissage (d), la pluralité de régions des images d'ensemble d'apprentissage est redimensionnée à une taille d'interpolation d'image de 16 x 16 pixels, et avant l'étape (g), les régions de l'image de test sont redimensionnées à une taille d'interpolation d'image de 16 x 16 pixels

5. Procédé selon la revendication 1, dans lequel la maladie de la peau est le psoriasis.

6. Système informatique comprenant un support non transitoire lisible par ordinateur sur lequel sont stockées des instructions qui, lorsqu'elles sont exécutées par un processeur, amènent le processeur à réaliser le procédé de la revendication 1.
